# EUROPÄISCHE PATENTANMELDUNG

(11) **EP 1 293 128 A1**
(43) Veröffentlichungstag der Anmeldung: **19.03.2003**
(21) Anmeldenummer: 02405774.7
(22) Anmeldetag: 06.09.2002
(51) Int. Cl.: A22C 17/00, F26B 1/00, B30B 9/12, C02F 3/28

(54) **Separator für Tierkörperteilebehandlung, Anlage damit und Verwendung**

(30) Priorität: 07.09.2001 CH 16582001
(71) Anmelder: Rindelaub, Frank Alex Erich, 2014 Bôle (CH); Berger, Anton, 3673 Linden (CH)
(72) Erfinder: Rindelaub, Frank Alex Erich, 2014 Bôle (CH); Berger, Anton, 3673 Linden (CH)
(74) Vertreter: AMMANN PATENTANWAELTE AG BERN

(57) **Zusammenfassung**

Der bei der Behandlung des Magen-Darm-Paketes inklusive der Blase in der Tierverwertung durch Auspressen anfallende sogenannte "Magen-Darm-Inhalt (MDI)" wird einer Vergärungsanlage zugeführt. Durch Verwenden eines Fermenters (17), der nach dem Pfropfenstromprinzip arbeitet, kann eine derartig hohe Zersetzung des Trockensubstanzanteils des Abwassers erzielt werden, dass das den Fermenter (17) verlassende Gärgut u.a. als Flüssigdünger verwendbar ist. Damit wird eine kostengünstige und umweltfreundliche Möglichkeit der Entsorgung für diese Abwässer geschaffen, die wegen des möglichen Gehalts an unentdeckten gefährlichen Krankheitserregern nicht ohne erhebliches Risiko unbehandelt der Kanalisation zugeführt werden kann. Zur effizienten Gewinnung des MDI wird ein Schneidschnecken-Separator (51) eingesetzt, der zusätzlich mit Schneidelementen (76, 90) ausgestattet ist, um Bestandteile wie z.B. Gedärm anzuschneiden und damit ein Austreten von Flüssigkeit zu ermöglichen.

## Beschreibung

Die vorliegende Erfindung bezieht sich auf einen Separator gemäss Oberbegriff des Anspruchs 1. Des Weiteren bezieht sie sich auf Anlagen mit dem Separator und die Verwendung des Separators.

Prozentangaben in der Beschreibung und den Ansprüchen sind Gewichtsprozent, soweit nichts Anderes angegeben ist.

In Schlachthöfen und anderen Tierverwertungsanlagen, aber auch Tierbeseitigungsanlagen für Tiere, die z.B. wegen gefährlicher Krankheiten ohne Gefährdung der Umwelt entsorgt werden müssen, treten grosse Mengen an sehr wasserhaltigem Material ein. Auch bei der Sterilisierung von ganzen Tierkörpern muss für eine vollständige Wirkung eine recht lange Zeitspanne für die Behandlung angesetzt werden, um sicherzustellen, dass der Tierkörper bis ins Innerste hinein der Sterilisierungstemperatur ausgesetzt war. Besonders der Wasseranteil sorgt hier für eine Verlängerung der Zeitdauer und einen erhöhten Energiebedarf. Eine bekannte Lösung dieses Problemes besteht darin, einen möglichst grossen Anteil der zu entsorgenden Körperteile auf eine geeignete und möglichst wenig energieintensive Art zu entwässern. Eine derartige Möglichkeit besteht darin, durch Komprimieren eine mechanische Entwässerung durchzuführen. Allerdings wurde bei dem bekannten Verfahren insbesondere Gedärm und die anderen Bestandteile des Verdauungssystems (Magen, Blase), nur wenig wirksam bearbeitet.

Der dabei anfallende flüssige Magen-Darminhalt ("MDI") inklusive Blaseninhalt, eine Art Gülle, weist eine beträchtliche Belastung an Stoffen auf. Die in jüngerer Zeit aufgetretene Sensibilisierung gegenüber Umweltgefährdungen lässt das Ablassen des MDI in die Kanalisation zunehmend problematisch und risikoreich erscheinen, ausserdem wird die Kläranlage dadurch stark belastet.

Eine Aufgabe der Erfindung besteht daher darin, eine Vorrichtung anzugeben, mit der sich Teile des tierischen Verdauungssystems wirksamer behandeln lassen, um den Magen-Darminhalt einschliesslich des Blaseninhalts, der sogenannte "MDI", zu gewinnen.

Eine andere Aufgabe der vorliegenden Erfindung besteht darin, ein Verfahren anzugeben, mit dem sich der MDI in eine kanalisierbare oder verwertbare Form mit angemessenem Aufwand umwandeln lässt.

Anspruch 1 gibt eine Vorrichtung an, die die erste Aufgabe löst. Die folgenden Ansprüche geben bevorzugte Ausführungsformen und Anlagen mit der Vorrichtung an.

Ein Verwendung der genannten Anlage, die die zweite Aufgabe löst, ist im Anspruch 11 angegeben. Die weiteren Ansprüche geben bevorzugte Ausführungsformen an.

Es wurde gefunden, dass der MDI in der Regel einen Trockensubstanzanteil (TS) von 6 - 15%, meistens 8 bis 10 % aufweist und daher grundsätzlich vergärbar ist. Es muss dabei jedoch darauf geachtet werden, dass die Vergärung nahezu bis zur Erschöpfung betrieben wird, um jegliche organische Substanz, soweit sie vergärbar ist, abzubauen und damit der Entwicklung von Krankheitserregern vorzubeugen bzw. diese dabei ebenfalls zu vernichten. Bei einem chargenweisen Betrieb besteht zum Einen das Problem, dass kein kontinuierlicher Betrieb möglich ist, und zum Anderen muss der gesamte Inhalt einer Charge gegen Ende überwacht und insbesondere auf einer Temperatur gehalten werden, die den Vergärungsprozess aufrecht erhält.

Gemäss der Erfindung wird vorgeschlagen, dieses Problem dadurch zu lösen, dass Pfropfenstrom-Fermenter eingesetzt werden, z.B. gemäss dem Patent US-5,521,092 (F. Rindelaub). In diesen Fermentern wird durch vorsichtiges Umwälzen ein Vermischen in Längsrichtung des Fermenters unterdrückt. Insbesondere ist in diesen Fermentern also vom Eingang zum Ausgang hin ein kontinuierlich ansteigender Fermentationsgrad zu beobachten und am Ausgang problemlos ein Abschnitt zu erreichen, in dem das Gärmaterial zu einem höchstmöglichen Grad vergoren ist.

Für die effektive Durchführung der Gewinnung des MDI durch Entleeren von Gedärm, Magen und Blase wurde eine Vorrichtung gefunden, die in einer ersten Stufe die Körperteile aufschlitzt, jedoch nicht zerschneidet, und sie in einer zweiten Stufe auspresst. Während des Pressens kann durch die Schlitze in den Hüllen das sonst im Innern der Körperteile eingeschlossene Material austreten.

Die Erfindung soll weiter an einem Ausführungsbeispiel erläutert werden. Es zeigen:

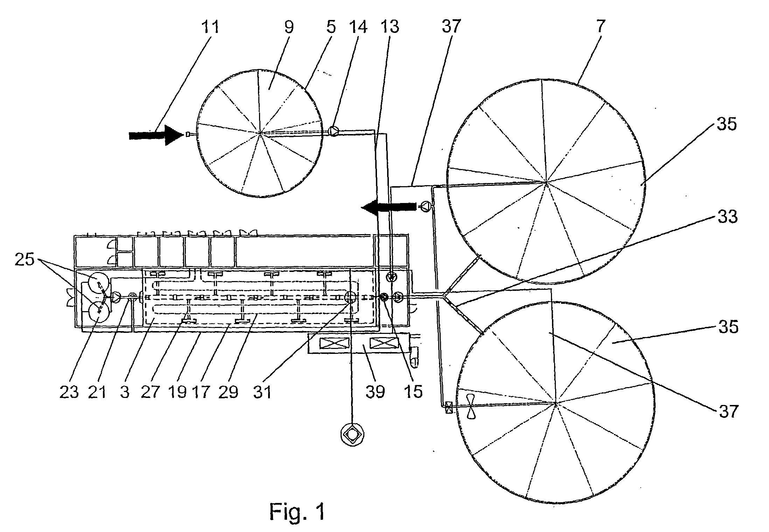

- Fig. 1: Prinzipdarstellung einer Vergärungsanlage;
- Fig. 2: Stirnansicht eines Schneidschnecken-Separators;
- Fig. 3: Draufsicht auf einen Schneidschnecken-Separator mit geöffneter Schneidschnecke;
- Fig. 4: Schnitt durch den Schneidschnecken-Separator gemäss IV - IV in Fig. 2;
- Fig. 5: Schnitt durch den Schneidschnecken-Separator gemäss V - V in Fig. 2;
- Fig. 6: Draufsicht auf ein Peripheriemesser;
- Fig. 7: Schnitt durch das Peripheriemesser gemäss VII - VII in Fig. 6;
- Fig. 8: Draufsicht auf ein Stirnmesser, und
- Fig. 9: Draufsicht auf das Ende der Separatorschnecke.

### Schneidschnecken-Separator

Insbesondere im Hinblick auf das sogenannte Magen-Darm-Paket, also Gedärm, Magen und Blase, inklusive deren Inhalt, wird also eine Anlage eingesetzt, bei der das Material zunächst eine Schneidschnecke durchläuft, die die Organe mit einer Vielzahl Schnitte versieht. Danach durchläuft das Material eine Schnecke mit einem Kompressionskegel am Ausgang. Unter dem am Ausgang der Schnecke dadurch erzeugten Druck wird das Material komprimiert und dabei der Inhalt (sogenannter "Magen-Darm-Inhalt", abgekürzt: MDI) herausgedrückt, der durch ein Sieb abfliessen kann.

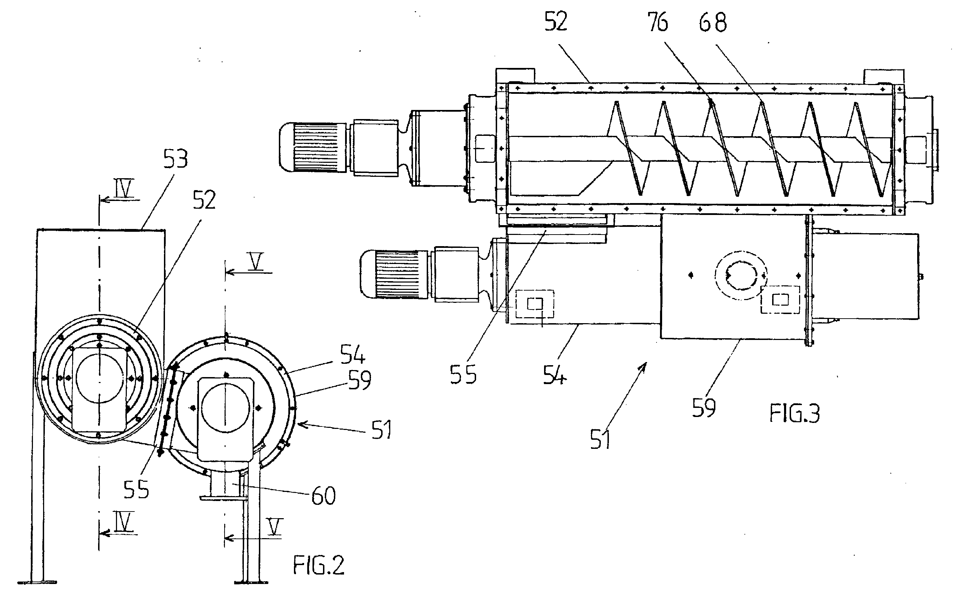

Figg. 2 - 9 zeigen den Schneidschnecken-Separator, der erfindungsgemäss gegenüber den bekannten Ausführungen modifiziert ist. Der Schneidschnecken-Separator 51 besteht im Wesentlichen aus einer Schneidschnecken-Einheit 52 mit Zufuhrschacht 53 und einem Separator 54, die über eine Verbindungsrutsche 55 verbunden sind. Über die Verbindungsrutsche 55 gelangt das von der Schneidschnecke 52 vorbehandelte Material in den Separator 54. Über den Zufuhrschacht 53 wird das Material der Schneidschnecke 52 zugeführt.

Der Separator 54 komprimiert im Wesentlichen das Material zu seinem Ende hin. Am Austrittsende 57 ist die Wand des Separators 54 durch einen Siebkorb 58 ersetzt. In der Regel weist der Siebkorb Längsschlitze mit einer Breite von 0,5 - 1 mm, aber auch bis 5 mm Breite auf. Durch den Siebkorb 58 tritt die Flüssigkeit, die aus dem komprimierten Material austritt, aus dem Inneren des Separators 54 aus, wird im Mantel 59 aufgefangen und fliesst über den Abfluss 60 ab. Das hier nicht dargestellte Material im Separator 54 wird von der Schnecke 62 zum Ende 57 transportiert, wo es durch einen engen Schlitz zwischen dem Gehäuseende 63 und einem verschiebbaren Kegel 64 aus dem Separator 54 austritt.

In der Entwicklung der Erfindung hat sich gezeigt, dass es weiter vorteilhaft ist, das Gehäuseende 63 zum Kegel 64 hin zu vereengen, indem die Gehäusewand leicht gekrümmt ausgeführt wird. Die Stege 65 verbessern das Hinausfördern des Materials.

Der Schneidschnecken-Teil besteht im Wesentlichen aus einem Trog 67, in dem eine Schnecke 68 angeordnet ist. Im Ausgangsbereich 69, an dem sich die Öffnung der Verbindungsrutsche 55 befindet, ist auf der Welle 70 der Schnecke 68 ein Flügel 71 angebracht, der das Material in die Verbindungsrutsche 55 bewegt.

Die im Weiteren nicht im Einzelnen besprochenen Teile, wie Antrieb 72, Lagerung- und Einstellvorrichtung 73 für den Konus 64 sind an sich bekannt.

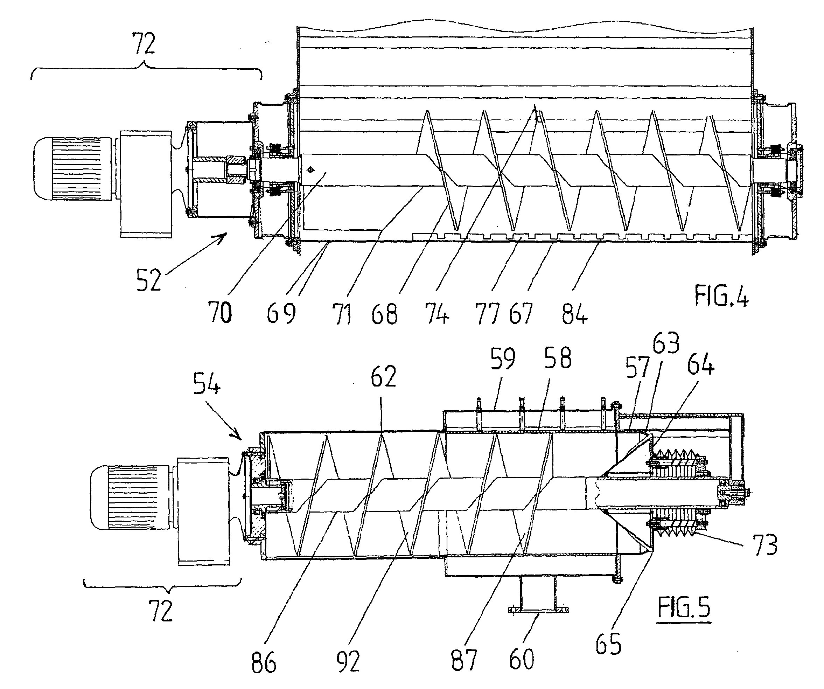

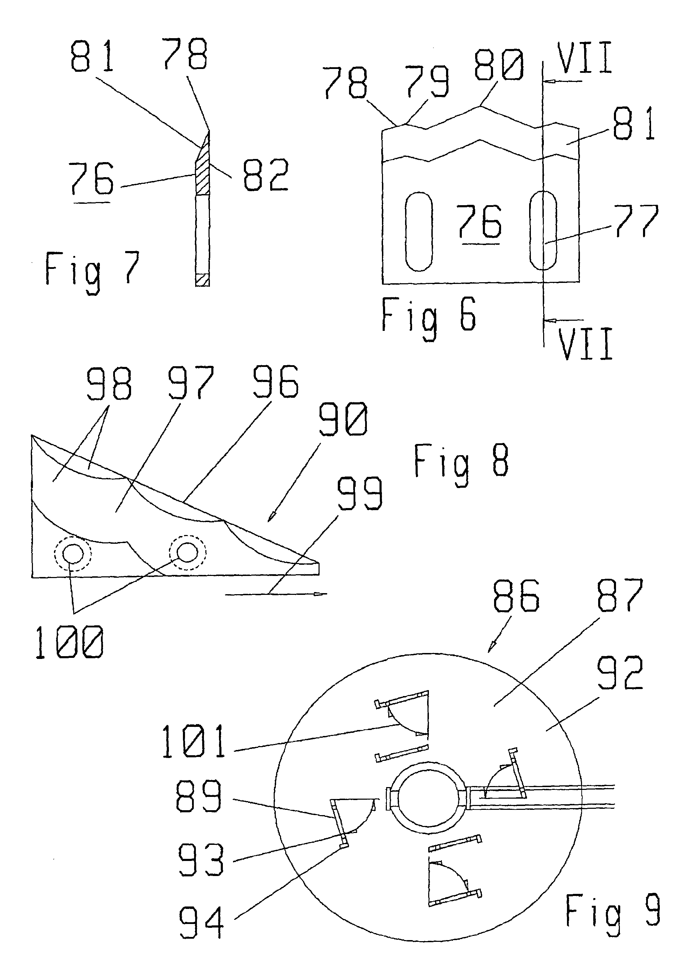

Im Schneidschnecken-Teil 52 sind gemäss einem Aspekt der Erfindung aussen an der Schneckenwendel 74 Peripheriemesser 76 angebracht. Fig. 6 und Fig. 7 zeigen ein solches Peripheriemesser 76 vergrössert. In seinem Basisteil befinden sich Langlöcher 77, die der Befestigung auf der Schneckenwendel 74 mittels Schrauben dienen. Durch die Langlochform erlauben sie eine Justierung, insbesondere auch im Hinblick auf ein optimales Zusammenwirken mit der Schiene 77 (Fig. 4). Die Schneidkante 78 (Fig. 6, 7) ist zickzackförmig mit stumpfen Winkeln an den Spitzen 79, 80 ausgeführt, wobei die mittlere Spitze 80 am weitesten vorsteht. Die Schneidkante 78 ist durch ein einseitiges Ausbilden einer Schräge 81 hergestellt, so dass eine Seitenfläche 82 geradlinig in die Schneidkante 78 ausläuft.

Wie in Fig. 4 zu sehen, befindet sich im Trog 67 die schon erwähnte Schiene 77, die zum Trog innen hin Nuten 84 aufweist. Die Messer 76 sind so angebracht, dass sie bei der Drehung der Schneidschnecke 52 durch die Nuten 84 hindurchlaufen. Ansonsten befindet sich jedoch zwischen den Peripheriemessern 76, insbesondere deren Schneidkanten 78, und dem Trog 67 ein beträchtlicher Abstand.

Die Wirkung der Peripheriemesser 76 im Betrieb besteht darin, dass sie grössere Bestandteile des Gutes (nicht dargestellt) im Schneidschneckenteil 52, z.B. Gedärm, Magen und Blase, anschneiden und damit Möglichkeiten schaffen, dass im Inneren dieser Teile befindliches Material austreten kann. Ein Zerschneiden in kleinere Bestandteile ist erfindungsgemäss nicht nötig und sogar nachteilig, da zerschnittene Teile eher in den MDI gelangen.

Die genannten Teile verfangen sich zusätzlich an der Schiene 77, wenn sie von den Peripheriemessern 76 nicht sofort angeschlitzt, sondern mitgenommen werden. Werden die Teile an der Schiene 77 angehalten, so laufen die Peripheriemesser 76 durch die Nuten 84 hindurch, wobei die Teile schliesslich angeschnitten werden.

In Fig. 4 ist der Übersichtlichkeit wegen nur ein Peripheriemesser 76 dargestellt, es sind jedoch eine Vielzahl Peripheriemesser 76 an der Schneckenwendel 74 anbringbar, bevorzugt pro Nut 84 in der Schiene 77 jeweils eines.

Gemäss einem anderen Aspekt der Erfindung befinden sich am Ende der Kompressionsschnecke 62, insbesondere auf ihrem letzten Gang 87, der in Fig. 9 dargestellt ist, Halterungen 89 für Stirnmesser 90 (Fig. 8). Die Halterungen 89 sind im Wesentlichen senkrecht auf der Oberfläche des Flügels 92 aufgeschweisste Stege mit Befestigungslöchern 93. Die Halterungen 89 sind in der Draufsicht im Wesentlichen L-förmig, wobei die kurzen Schenkel 94 als Anlage für die Messer 90 gegen den Widerstand des Gutes dienen, das in diesem Bereich des Separator-Teiles 54 unter hohem Druck steht, und damit einen erheblichen Widerstand leistet.

Die Messer 90 sind im Wesentlichen in der Form eines rechtwinkligen Dreiecks ausgeführt. Die Schneidkante 96 bildet die Hypotenuse des Dreieckes und wird durch einen einseitigen Wellenschliff 97 mit zwei Stufen 98 hergestellt. Die Stirnmesser 90 werden so an der Schneckenwendel 92 angebracht, dass sie sich in Richtung des Pfeiles 99 bewegen. Die Befestigung der Stirnmesser 90 erfolgt mittels Schrauben (nicht dargestellt) durch die Löcher 100 bzw. 93 an der jeweiligen Halterung 89.

Die Halterungen 89 sind derart auf der Schneckenwendel 92 angebracht, dass sie nicht exakt tangential stehen. Der Winkel 101 zum Radius beträgt beispielsweise 75°. Ausserdem sind die Befestigungen 89 ungleichmässig über die Oberfläche des Schneckenwendels 92 verteilt, um eine optimierte örtliche Verteilung der Wirkung der Messer 90 zu erzielen.

Die Messer 90 dienen im Wesentlichen ebenso wie die Messer 76 dazu, Gedärm, Magen und Blase anzuschlitzen und damit dem darin enthaltenen Material das Austreten zu ermöglichen.

### Gäranlage

Die Gäranlage 1 zur Behandlung des MDI weist einen Prozessteil 3, einen Eingangsvorratsteil 5 und ein Endlager 7 auf. Der Eingangsvorratsteil 5 besteht im Wesentlichen aus einem hinreichend grossen Reservoir 9, in das frisch angelieferter MDI eingeleitet wird, wie es durch Pfeil 11 symbolisiert ist. Über eine Leitung 13 mit einer Pumpe 14 gelangt frischer MDI zu einem ersten Wärmetauscher 15. In diesem Wärmetauscher nimmt der frische MDI Wärme aus dem vergorenen MDI auf, das den Fermenter 17 hier verlässt und diesen ersten Wärmetauscher 15 durchströmt.

Über eine weitere Leitung 19 gelangt der frische MDI zu einem zweiten Wärmetauscher 21, in dem er Wärme von dem MDI aufnimmt, der von dem Hygienisator 23 zum Fermenter 17 strömt. Vom zweiten Wärmetauscher 21 gelangt der frische MDI nun in einen der beiden Hygienisatorbehälter 25.

Im Hygienisator wird der MDI weiter auf eine Temperatur von 70 °C erhitzt und während mindestens 60 Minuten auf dieser Temperatur gehalten. Damit werden die veterinär-hygienischen Auflagen für das Endprodukt, das als Flüssigdünger verwertbar sein soll, erfüllt.

Während in dem einen Behälter 25 die Hygienisierung erfolgt, wird aus dem jeweils anderen Behälter hygienisiertes Material dem Fermenter 17 über den zweiten Wärmetauscher 21 zugeführt. Durch den Wechsel zwischen zwei Behältern ist es möglich, trotz chargenweisen Betriebs des Hygienisators 23 einen kontinuierlichen Fluss zum Fermenter zu gewährleisten. In dem Fermenter verweilt das Gärmaterial während ca. 18 bis 20 Tagen, wobei es den Fermenter 17 im quasi-Pfropfenstrom-Prinzip durchläuft. Das eingebaute Langsamlauf-Rührwerk 27 dient dabei insbesondere der Freisetzung von Gasblasen. Ggf. kann eine Vorrichtung am Boden des Fermenters (nicht dargestellt) für den Abtransport von eventuell abgesetzten Feststoffen wie Sand, Steinchen usw. sorgen. Oft genügt es, die Flügel des Rührwerks so auszubilden, dass sie das Sediment vorwärts bewegen.

Der Fermenter 17 ist mit einer Heizung 29 und einer Temperatursteuerung ausgerüstet, welche die Temperatur im Fermenter 17 auf einem vorbestimmten Wert in dem bevorzugten Temperaturbereich von 35 bis 57 °C hält.

Vom Auslass 31 des Fermenters 17 gelangt das vergorene Material über den ersten Wärmetauscher 15 und das Leitungssystem 33 zu den Endlagertanks 35. Die Endlagertanks haben eine hinreichende Kapazität, um Perioden überbrücken zu können, in denen ein Austrag des vergorenen Materials als Flüssigdünger nicht möglich ist.

Die gesamte Anlage ist weitgehend geschlossen ausgeführt und verfügt über ein Abluftsystem (Leitungen 37 und Abluftfilter 39), um entstehende, mit Geruchsstoffen belastete Abluft so weit zu reinigen, dass sie in die Umgebung abgelassen werden kann, und um der Anlage frische Luft zuzuführen.

Das im Fermenter enstehende Biogas mit ca. 60 Vol.-% Methangehalt wird aufbereitet und in einem Speicher 41 zwischengelagert. Von dem Speicher 41 wird es einem Blockheizkraftwerk (nicht dargestellt) zugeführt. Der im Blockheizkraftwerk erzeugte Strom wird nur zu einem geringen Teil für den Betrieb der Anlage benötigt. Der Rest kann verkauft werden.

Die erzeugte Wärme wird zur Deckung des Wärmebedarfs der Anlage verwendet, insbesondere zur Beheizung des Hygienisators 23 und des Fermenters 17.

Die Leistung der Vergärungsanlage zeigt sich an den folgenden Zahlen einer beispielhaften Ausführung:
Materialzufuhr: 20'000 t / Jahr, davon 9 % Trockensubstanz (1'800 t), in der Trockensubstanz 80 % organisches Material (OTS) (1440 t).
Der Fermenter bewirkt einen Abbau der organischen Trockensubstanz (OTS) um 70 % und erzeugt 2'250 m³ Biogas / Tag mit einem Methangehalt von 60 %. Den Fermenter verlassen noch ca. 19'000 t / Jahr mit 4 % TS.
Aus der vorangehenden Beschreibung sind dem Fachmann Abwandlungen zugänglich, ohne den Schutzbereich der Erfindung zu verlassen, der durch die Ansprüche definiert ist. Insbesondere können in der Gäranlage die Kapazitäten der verschiedenen Lager sowie des Fermenters an verschiedene Anforderungen bezüglich Lagerdauer und Anliefermengen angepasst werden. Je nach Anforderung kann auch auf den Hygienisator verzichtet werden.
Beim Schneidschnecken-Separator sind beispielsweise folgende Abwandlungen denkbar:
   - Die Schneidkante der Stirn- und/oder Peripheriemesser können auf andere Art gebildet sein, z.B. durch zweiseitiges Anschleifen, oder eine andere Form aufweisen, z.B. einfach schräg statt gezackt bzw. umgekehrt.
   - Die Halterungen für die Stirnmesser können in verschiedenen Winkeln angebracht werden von exakt oder nahezu tangential bis z.B. 60°. Kleinere Winkel führen dabei zu grösseren seitlichen Kräften, und verringerter Kraft, die in Längsrichtung wirkt und damit die Schneidwirkung fördern.
   - Es kann auf die eine oder andere Massnahme (Peripheriemesser, Stirnmesser, Schiene) verzichtet werden, im Extremfall sogar nur entweder Peripheriemesser oder Stirnmesser vorhanden sein.

## Patentansprüche

1. Separator (51) zum Entfernen von Flüssigkeit aus einem Gut, das im Wesentlichen aus Magen, Darm und Blase von Tieren besteht, mit einer ersten (52) und einer zweiten (54) Einheit mit jeweils einer Schnecke (62, 68), wobei der Ausgang der ersten Einheit mit dem Eingang der zweiten Einheit verbunden ist, **dadurch gekennzeichnet, dass** der Separator ein Schneidschnecken-Separator ist, in dem mindestens eine der Schnecken auf dem Kamm und/oder am Ende der Wendel (68) mit mindestens einem messerartigen Schneidelement (76, 90) ausgestattet ist, um Teile in dem Gut, das von der Schnecke befördert wird, anzuschneiden und Ausgänge für in den Teilen befindliches Material herzustellen.

2. Schneidschnecken-Separator (51) gemäss Anspruch 1, **dadurch gekennzeichnet, dass** in der ersten Einheit (52) mindestens ein Schneidelement (76), bevorzugt eine Mehrzahl von Schneidelementen, am Kamm der Schneckenwendel (74) der Schnecke (68) angeordnet ist, um bei Drehung der Schnecke eine Schneidbewegung durchzuführen.

3. Schneidschnecken-Separator (51) gemäss Anspruch 2, **dadurch gekennzeichnet, dass** in der ersten Einheit zusätzlich mindestens eine Erhebung der Innenwand des Troges (67), in dem sich die Schnecke (68) befindet, bildende Rückhaltemittel (77) befindet, um vom Schneidelement (76) mitgenommenes Gut aufzuhalten und ein Anschneiden des Gutes zu bewirken.

4. Schneidschnecken-Separator (51) gemäss Anspruch 3, **dadurch gekennzeichnet, dass** das Rückhaltemittel (77) Vertiefungen (77) aufweist und so hoch ist, dass die das Rückhaltemittel passierenden Schneidelemente (76) durch die Vertiefungen hindurchlaufen.

5. Schneidschnecken-Separator (51) gemäss einem der Ansprüche 1 bis 4, **dadurch gekennzeichnet, dass** die Schneckenwendel (92) der Schnecke (62) der zweiten Einheit (54) nahe dem Austrittsende, insbesondere auf dem letzten Gang (87), mindestens ein Schneidelement (90) aufweist, so dass das Schneidelement an der Fläche der Schneckenwendel gleitendes Gut anschneidet.

6. Schneidschnecken-Separator (51) gemäss Anspruch 5, **dadurch gekennzeichnet, dass** der schneidende Bereich der Schneidelemente (90) in einem Winkel von 90° bis 60°, bevorzugt 75°, zum Radius der Schnecke verläuft.

7. Schneidschnecken-Separator (51) gemäss einem der Ansprüche 5 bis 6, **dadurch gekennzeichnet, dass** eine Mehrzahl von Schneidelementen (90) vorhanden ist, die auf mindestens zwei, bevorzugt mindestens halb soviel und weiter bevorzugt genau so vielen Radien wie Schneidelementen angeordnet sind, um eine Verteilung der Wirkung über den Schneckenradius zu erhalten.

8. Anlage mit einem Schneidschneckenseparator (51) gemäss einem der Ansprüche 1 bis 7,
**dadurch gekennzeichnet, dass** weiter
folgende Einrichtungen vorhanden sind:
- ein liegender, im Wesentlichen nach dem Pfropfenstromprinzip arbeitender Fermenter (17),
- ein erster Wärmetauscher (15) für den Wärmeaustausch zwischen zwei Flüssigkeiten, wobei der Einlass des Wärmetauschers für die erste Flüssigkeit mit dem Auslass (31) des Fermenters und der Auslass für die zweite Flüssigkeit mit dem Einlass des Fermenters verbunden sind, so dass durch das aus dem Fermenter austretende Gärgut das eintretende Abwasser vorwärmbar ist, und
- ein Hygienisator (23) zwischen erstem Wärmetauscher (15) und Einlass des Fermenters (17) eingeordnet ist.

9. Anlage gemäss Anspruch 8, **dadurch gekennzeichnet, dass**
zwischen Hygienisator (23) und Fermenter (17) ein zweiter Wärmetauscher (21) angeordnet ist, der von dem aus dem Hygienisator austretenden Abwasser und das in den Hygienisator eintretende Abwasser durchströmbar ist, um eine Absenkung der Temperatur des zum Fermenter strömenden Abwassers, ein Vorwärmen des in den Hygienisator strömenden Abwassers und damit eine Reduktion des Wärmebedarfs des Hygienisators zu erzielen.

10. Anlage gemäss Anspruch 9,
**dadurch gekennzeichnet, dass**
der Hygienisator (23) mindestens zwei Hygienisatorbehälter (25) aufweist, die sequentiell füllbar bzw. entleerbar sind, so dass ein im Wesentlichen konstanter Strom von Abwasser aus dem Hygienisator in den Fermenter (17) erzielbar ist.

11. Verwendung einer Anlage gemäss einem der Ansprüche 8 bis 10 zur Behandlung des Inhalts von Magen, Darm und Blase (des "MDI") von Tieren, insbesondere aus dem Betrieb von Schlachthöfen, wobei der MDI mittels des Schneidschneckenseparators (51) abgetrennt und dem Fermenter (17) zugeführt wird, um eine hohe Hygienisierungswirkung und eine Zerlegung der organisch abbaubaren Bestandteile des Abwassers zu erzielen, durch das aus dem Fermenter (17) austretende Gärgut das in den Fermenter eintretende Material in einem ersten Wärmetauscher (15) vorgewärmt wird, um ein schnelleres Einsetzen der Fermentierung zu erreichen, und der vorgewärmte MDI vor dem Eintritt in den Fermenter (17) einen Hygienisator (23) durchläuft, um ein vorgegebenes Hygienisierungsmass des Gärgutes am Auslass (31) des Fermenters (17) zu gewährleisten.

12. Verwendung gemäss Anspruch 11,
**dadurch gekennzeichnet, dass**
im Fermenter (17) eine Temperatur des Gärgutes im Bereich von 30 bis 70 °C, bevorzugt von 35 bis 57 °C, eingestellt wird und die Verweilzeit des Gärgutes mindestens 10 Tage, bevorzugt 18 bis 20 Tage, beträgt.

13. Verwendung gemäss einem der Ansprüche 11 oder 12,
**dadurch gekennzeichnet, dass**
das in den Hygienisator (23) eintretende Abwasser durch das aus dem Hygienisator austretende Abwasser in einem zweiten Wärmetauscher (21) vorgewärmt wird, um den Energiebedarf des Hygienisators zu verringern.

14. Verwendung gemäss einem der Ansprüche 11 bis 13,
**dadurch gekennzeichnet, dass**
die Hygienisierung im Hygienisator (23) bei einer Temperatur von wenigstens 65 °C, insbesondere von etwa 70 °C erfolgt und mindestens eine halbe Stunde, bevorzugt mindestens eine Stunde durchgeführt wird.

15. Verwendung gemäss einem der Ansprüche 11 bis 14,
**dadurch gekennzeichnet, dass**
das das im Fermenter (17) entstehende brennbare Gas in einem Blockheizkraftwerk verbrannt wird, um Wärme und/oder elektrischen Strom, bevorzugt beide Energieformen, zu erzeugen.

16. Verwendung des mit dem Verfahren gemäss einem der Ansprüche 11 bis 15 oder der Anlage gemäss einem der Ansprüche 8 bis 10 herstellbaren Gärgutes als Flüssigdünger.
